# EUROPEAN PATENT APPLICATION

(11) **EP 4 309 481 A1**
(43) Date of publication of application: **24.01.2024**
(21) Application number: 23174774.2
(22) Date of filing: 23.05.2023
(51) Int. Cl.: A01D 34/00, G05D 1/02

(54) **METHOD FOR ESTABLISHING BOUNDARY OF WORKING AREA OF LAWNMOWER, LAWNMOWER AND COMPUTER READABLE STORAGE MEDIUM**

(30) Priority: 30.06.2022 CN 202210765061; 30.06.2022 CN 202210765062
(71) Applicant: Willand (Beijing) Technology Co., Ltd., Beijing 100192 (CN)
(72) Inventor: LI, Chunhong, Beijing, 100192 (CN); LIN, Degan, Beijing, 100192 (CN)
(74) Representative: Kraus & Weisert Patentanwälte PartGmbB

(57) **Abstract**

A method for establishing a boundary of a working area of a lawnmower, a lawnmower and computer readable storage medium are provided. The method acquires a first to-be-processed boundary of a working area, and expands the first to-be-processed boundary outward by a preset distance as a second to-be-processed boundary; controls the lawnmower to move along the second to-be-processed boundary, acquires environmental information of the lawnmower within the second to-be-processed boundary with a sensor of the lawnmower, to determine a boundary of a non-working area in the environmental information; controls the lawnmower to move along the boundary of the non-working area to acquire a third to-be-processed boundary; and establishes the boundary of the working area of the lawnmower based on the second and the third to-be-processed boundaries. The established boundary of the working area is accurate, and there is no need to lay out wires, so the cost is low.

## Description

### TECHNICAL FIELD

The present disclosure relates to the technical field of lawnmowers, in particular to a method for establishing a boundary of a working area of a lawnmower, and a lawnmower.

### BACKGROUND

Lawnmowers are widely used in scenarios such as maintenance of yard lawns and mowing of large meadows. During working, a lawnmower needs to first establish a boundary of a working area, and after establishing the boundary of the working area, the lawnmower may perform mowing work independently based on the boundary of the working area.

When establishing the boundary of the working area, existing lawnmowers usually use manual remote control to control the lawnmower to move in order to determine the boundary of the working area based on a movement trajectory of the lawnmower, or arrange wires at the boundary of the working area and uses the wires between the lawnmower and the boundary to position the boundary of the working area. However, because of manual operation as well as positioning accuracy, the manual remote control method often results in less precise boundaries of working areas being determined, and mowing based on such boundaries of the working areas may result in exceeding users' desired boundaries or failing to mow the working areas cleanly. In addition, the wire arrangement method is costly and its operation is cumbersome.

### SUMMARY

In view of the above problems, embodiments of the present disclosure are proposed, providing a method for establishing a boundary of a working area of a lawnmower, a method for mowing and a lawnmower, to solve at least the above problems.

One or more embodiments of the present disclosure provide a method for establishing a boundary of a working area of a lawnmower, including: acquiring a first to-be-processed boundary of a working area of a lawnmower, and expanding the first to-be-processed boundary outward a preset distance as a second to-be-processed boundary; controlling the lawnmower to move along the second to-be-processed boundary, acquiring environmental information of the lawnmower within the second to-be-processed boundary with a sensor of the lawnmower, to determine a boundary of a non-working area in the environmental information, the non-working area indicating an area where the lawnmower is unable to perform mowing work; and controlling, based on the boundary of the non-working area, the lawnmower to move along the boundary of the non-working area to acquire a third to-be-processed boundary to avoid the non-working area, and establishing the boundary of the working area of the lawnmower based on the second to-be-processed boundary and the third to-be-processed boundary.

Alternatively, the acquiring a first to-be-processed boundary of a working area of a lawnmower, includes: controlling the lawnmower to move along an edge of the working area based on a movement instruction set by a user, and acquiring positioning information of the lawnmower during the movement; and determining the first to-be-processed boundary based on the positioning information of the lawnmower.

Alternatively, the sensor includes a lawn detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary based on the lawn detection sensor, to determine a boundary of a non-lawn area in the environmental information.

Alternatively, the sensor further includes a collision detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary with the collision detection sensor, to determine a boundary of an obstacle area in the environmental information.

Alternatively, the sensor further includes a depth detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary with the depth detection sensor, to determine a boundary of a recessed area that the lawnmower is unable to pass through in the environmental information.

Alternatively, the method further includes: determining the preset distance based on an error value of the positioning information of the lawnmower, where the error value refers to an error value between the positioning information and an actual location of the lawnmower.

According to another aspect of the present disclosure, a non-transitory computer readable storage medium storing computer instructions is provided, where, the computer instructions are used to cause the computer to perform the method according to the above aspect.

According to another aspect of the present disclosure, a lawnmower is provided, including: one or more processors; and a memory storing a program; where, the program includes instructions, the instructions, when executed by the processor, cause the processor to perform a method for establishing a boundary of a working area of a lawnmower, the method including: acquiring a first to-be-processed boundary of a working area of a lawnmower, and expanding the first to-be-processed boundary outward a preset distance as a second to-be-processed boundary; controlling the lawnmower to move along the second to-be-processed boundary, acquiring environmental information of the lawnmower within the second to-be-processed boundary with a sensor of the lawnmower, to determine a boundary of a non-working area in the environmental information, the non-working area indicating an area where the lawnmower is unable to perform mowing work; and controlling, based on the boundary of the non-working area, the lawnmower to move along the boundary of the non-working area to acquire a third to-be-processed boundary to avoid the non-working area, and establishing the boundary of the working area of the lawnmower based on the second to-be-processed boundary and the third to-be-processed boundary.

Alternatively, the sensor includes a lawn detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary with the lawn detection sensor, to determine a boundary of a non-lawn area in the environmental information.

Alternatively, the sensor further includes a collision detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary with the collision detection sensor, to determine a boundary of an obstacle area in the environmental information.

Alternatively, the sensor further includes a depth detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary with the depth detection sensor, to determine a boundary of a recessed area that the lawnmower is unable to pass through in the environmental information.

Alternatively, the method for establishing a boundary of a working area performed by the processor further includes: determining the preset distance based on an error value of the positioning information of the lawnmower, where the error value refers to an error value between the positioning information and an actual location of the lawnmower.

Alternatively, at least one side of a front end of the lawnmower is mounted with a cutting deck, the processor is further configured to perform a method for mowing at a working boundary of a lawnmower, and the method includes: controlling the lawnmower to move along the built boundary of the working area of the lawnmower; determining a to-be-processed boundary within the boundary of the working area based on a detection unit and a positioning unit in the lawnmower, where the to-be-processed boundary is a boundary of an area where the lawnmower is unable to perform mowing work, the detection unit is configured to detect the area where the lawnmower is unable to perform mowing work within the boundary of the working area, and the positioning unit is configured to acquire the boundary of the area where the lawnmower is unable to perform mowing work as the to-be-processed boundary; and updating the boundary of the working area as a boundary movement path of the lawnmower based on the to-be-processed boundary, and controlling the side of the lawnmower where the cutting deck is mounted to move along the boundary movement path to perform mowing work at the working boundary.

Alternatively, the controlling the lawnmower to move along the built boundary of the working area of the lawnmower, includes: determining, based on current positioning information of the lawnmower and the boundary of the working area, a coordinate point on the boundary of the working area nearest to the current positioning of the lawnmower; and controlling the lawnmower to move to the coordinate point to cause the lawnmower to move along the boundary of the working area.

Alternatively, the method for mowing at a working boundary performed by the processor further includes: performing smoothing processing on the boundary movement path to obtain a first boundary movement path, controlling the side of the lawnmower where the cutting deck is mounted to move along the first boundary movement path to perform mowing work at the working boundary.

Alternatively, the method for mowing at a working boundary performed by the processor further includes: translating the first boundary movement path inward by a first preset distance to obtain a second boundary movement path, where the first preset distance is less than a length of the cutting deck of the lawnmower; and controlling the side of the lawnmower where the cutting deck is mounted to move along the second boundary movement path to perform mowing work at the working boundary.

Alternatively, the detection unit includes a lawn detection sensor, and the determining a to-be-processed boundary within the boundary of the working area based on a detection unit and a positioning unit in the lawnmower, includes: acquiring a boundary of a non-lawn area within the boundary of the working area as the to-be-processed boundary, with the lawn detection sensor and the positioning unit.

Alternatively, the detection unit further includes a collision detection sensor, and the determining a to-be-processed boundary within the boundary of the working area based on a detection unit and a positioning unit in the lawnmower, includes: acquiring a boundary of an obstacle area within the boundary of the working area as the to-be-processed boundary, with the collision detection sensor and the positioning unit.

Alternatively, the detection unit further includes a depth detection sensor, and the determining a to-be-processed boundary within the boundary of the working area based on a detection unit and a positioning unit in the lawnmower, includes: acquiring a boundary of a recessed area that the lawnmower is unable to pass through within the boundary of the working area as the to-be-processed boundary, with the depth detection sensor and the positioning unit.

According to another aspect of the present disclosure, a method for mowing at a working boundary of a lawnmower is provided, the method being applied to a lawnmower, at least one side of a front end of the lawnmower being mounted with a cutting deck, and the method including: controlling the lawnmower to move along an edge of a working area to obtain a first preset boundary; expanding the first preset boundary outward by a second preset distance as a second preset boundary; controlling the lawnmower to move along the second preset boundary, and determining a third preset boundary within the second preset boundary with a detection unit and a positioning unit, the third preset boundary being a boundary of an area where the lawnmower is unable to perform mowing work; establishing a preset boundary of the lawnmower based on the second preset boundary and the third preset boundary; controlling the lawnmower to move along the preset boundary; determining a to-be-processed boundary within the preset boundary based on the detection unit and the positioning unit in the lawnmower, where the to-be-processed boundary is a boundary of an area where the lawnmower is unable to perform mowing work, the detection unit is configured to detect the area where the lawnmower is unable to perform mowing work within the preset boundary, and the positioning unit is configured to acquire the boundary of the area where the lawnmower is unable to perform mowing work as the to-be-processed boundary; and updating the preset boundary as a boundary movement path of the lawnmower based on the to-be-processed boundary, and controlling the side of the lawnmower where the cutting deck is mounted to move along the boundary movement path to perform mowing work at the working boundary.

The present disclosure provides a method for establishing a boundary of a working area of a lawnmower, a method for mowing and a lawnmower, by acquiring a first to-be-processed boundary of a working area of a lawnmower, expanding the first to-be-processed boundary outward a preset distance as a second to-be-processed boundary; controlling the lawnmower to move along the second to-be-processed boundary, acquiring environmental information of the lawnmower within the second to-be-processed boundary with a sensor of the lawnmower, to determine a boundary of a non-working area in the environmental information, the non-working area indicating an area where the lawnmower is unable to perform mowing work; controlling, based on the boundary of the non-working area, the lawnmower to move along the boundary of the non-working area to acquire a third to-be-processed boundary to avoid the non-working area, and establishing the boundary of the working area of the lawnmower based on the second to-be-processed boundary and the third to-be-processed boundary. The second to-be-processed boundary is obtained by expansion, and the non-working area in the second to-be-processed boundary is eliminated by using the sensor of the lawnmower, to establish the final boundary of the working area, so that the built boundary of the working area is more accurate and convenient, and the boundary of the working area built by using the method of the present disclosure does not require the arrangement of wires, which is easy to operate and less costly.

In addition, the lawnmower in the present disclosure, when mowing at the boundary of the working area, detects the boundary of the non-working area within the boundary of the working area using the detection unit and the positioning unit of the lawnmower based on the built boundary of the working area of the lawnmower, so as to update the boundary of the working area in real time to obtain the boundary movement path, then the side of the lawnmower where the cutting deck is mounted is controlled to mow along the boundary movement path, so that the mowing work at the boundary of the working area has better effect and the cutting is cleaner, avoiding the situation of missing or exceeding an actual boundary; in addition, there is no need to arrange wires, avoiding the problem of inaccurate mowing at the boundary of the working area due to inaccurate position of the wires.

### BRIEF DESCRIPTION OF THE DRAWINGS

In order to more clearly illustrate the technical solution in embodiments of the present disclosure or in the existing technology, the following will be a brief introduction to the accompanying drawings required in the description of the embodiments or the existing technology, it is obvious that the accompanying drawings in the following description are some of the embodiments of the present disclosure, and other accompanying drawings can be obtained from these accompanying drawings by those of ordinary skill in the art without creative work.
FIG. 1 is a schematic flowchart of a method for establishing a boundary of a working area of a lawnmower according to an exemplary embodiment of the present disclosure;
FIG. 2 is a schematic diagram of a process of the method for establishing a boundary of a working area of a lawnmower according to an exemplary embodiment of the present disclosure;
FIG. 3 a structural block diagram of an apparatus for establishing a boundary of a working area of a lawnmower according to an exemplary embodiment of the present disclosure;
FIG. 4 is a schematic flowchart of a method for mowing at a working boundary of a lawnmower according to an exemplary embodiment of the present disclosure;
FIG. 5 is a schematic flowchart of the method for mowing at a working boundary of a lawnmower according to another embodiment of the present disclosure;
FIGS. 6A to 6C are schematic diagrams of processes of the method for mowing at a working boundary of a lawnmower according to an exemplary embodiment of the disclosure; and
FIG. 7 is a structural block diagram of an apparatus for mowing at a working boundary of a lawnmower according to an exemplary embodiment of the present disclosure.

### Description of reference numerals:

300, apparatus for establishing a boundary of a working area of a lawnmower; 301, collection module; 302, detection module; 303, map generating module; 700, apparatus for mowing at a working boundary of a lawnmower; 701, control module; 702, detection module; 703, path generation module.

### DETAILED DESCRIPTION OF EMBODIMENTS

In order to enable those skilled in the art better understand the technical solution of the embodiments of the present disclosure, in conjunction with the accompanying drawings in the embodiments of the present disclosure, the technical solution in the embodiments of the present disclosure will be clearly and completely described below. Obviously, the described embodiments are only part of the embodiments of the present disclosure, rather than all the embodiments. Based on the embodiments in the present disclosure, all other embodiments obtained by those of ordinary skill in the art without creative work should fall within the protection scope of the embodiments of the present disclosure.

For ease of understanding, before describing the specific embodiments of the present disclosure in detail, first, application scenarios of a method for establishing a boundary of a working area of a lawnmower, a method for mowing and a lawnmower of the present disclosure are illustrated in exemplary descriptions.

Lawnmowers are widely used in scenarios such as maintenance of yard lawns and mowing of large meadows. During working, a lawnmower needs to first establish a boundary of a working area, and after establishing the boundary of the working area, the lawnmower may perform mowing work independently based on the boundary of the working area.

When establishing the boundary of the working area, existing lawnmowers usually use manual remote control to control the lawnmower to move in order to determine the boundary of the working area based on a movement trajectory of the lawnmower, or arrange wires at the boundary of the working area and uses the wires between the lawnmower and the boundary to position the boundary of the working area. However, because of manual operation as well as positioning accuracy, the manual remote control method often results in less precise boundaries of working areas being determined, and mowing based on such boundaries of the working areas may result in exceeding users' desired boundaries or failing to mow the working areas cleanly. In addition, the wire arrangement method is costly and its operation is cumbersome. In view of this, the present disclosure proposes a method for establishing a boundary of a working area of a lawnmower, a method for mowing and a lawnmower, which may solve the above problems in the existing technology.

Specific embodiments of the present disclosure will be described in detail below in connection with the accompanying drawings.

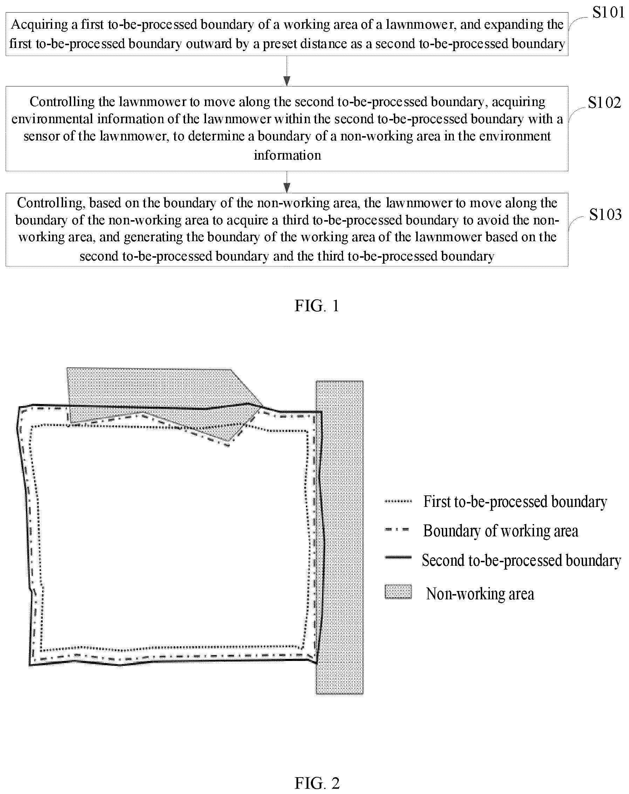

FIG. 1 is a schematic flowchart of a method for establishing a boundary of a working area of a lawnmower according to an exemplary embodiment of the present disclosure, as shown in the figure, the present embodiment mainly includes the following steps:

S101, acquiring a first to-be-processed boundary of a working area of a lawnmower, and expanding the first to-be-processed boundary outward a preset distance as a second to-be-processed boundary.

Exemplarily, referring to FIG. 2, the first to-be-processed boundary of the lawnmower is acquired, and the first to-be-processed boundary is expanded outward by the preset distance to obtain the second to-be-processed boundary. The first to-be-processed boundary may be obtained by manually remote controlling the lawnmower to move along an edge of the working area, or by acquiring a boundary of the working area already stored in the lawnmower, or the first to-be-processed boundary may be acquired by interacting with a cloud server or other mobile devices, which is not limited by the present embodiment.

It should be noted that in an application scenario of the lawnmower, there may be an open area in the working area of the lawnmower with part of its boundary without enclosures, and outside of the unenclosed boundary is still an area where the lawnmower can work. For example, lawns of multiple users are interconnected and not bounded by enclosures. The second to-be-processed boundary may be obtained by expanding the first to-be-processed boundary outward to delineate the maximum boundary of the working area as the second to-be-processed boundary to avoid the lawnmower moving beyond the maximum boundary of the working area during subsequent processing of S 102, resulting in affecting other users.

In a specific implementation, the first to-be-processed boundary may be obtained by manually remote controlling the lawnmower to move along an edge of the working area, in the following steps:

S1011, controlling the lawnmower to move along an edge of the working area based on a movement instruction set by a user, and acquiring positioning information of the lawnmower during the movement.

S1012, determining the first to-be-processed boundary based on the positioning information of the lawnmower.

Exemplarily, based on the movement instruction set by the user, the lawnmower is controlled to move along the edge of the working area and acquire the positioning information of the lawnmower, a frequency for acquiring the positioning information may be once every 0.1 seconds, and a method for acquiring the positioning information may be GPS navigation positioning, visual positioning or RTK (i.e., Real Time Kinematic) positioning, which is not limited by the present disclosure. This implementation acquires the first to-be-processed boundary by controlling the lawnmower to collect the positioning information, avoiding acquiring the first to-be-processed boundary by way of setting wires, reducing the workload and improving an efficiency of acquiring the first to-be-processed boundary.

In a specific implementation, the preset distance may be determined based on an error value of the positioning information of the lawnmower, where the error value refers to an error value between the positioning information of the lawnmower and an actual location of the lawnmower. Usually, the preset distance does not exceed 1 meter. Based on the error value of the positioning information of the lawnmower, the preset distance expanded from the first to-be-processed boundary may be dynamically adjusted. For example, when a positioning signal is of good quality, the expanded distance may be dynamically increased; conversely, the expanded distance needs to be dynamically reduced to prevent affecting other users due to a poor positioning signal.

S 102, controlling the lawnmower to move along the second to-be-processed boundary, acquiring environmental information of the lawnmower within the second to-be-processed boundary with a sensor of the lawnmower, to determine a boundary of a non-working area in the environmental information.

Exemplarily, referring to FIG. 2, the non-working area in the environmental information refers to an area where the lawnmower is unable to perform mowing work, such as an obstacle area, a non-lawn area, and a concave ground where the lawnmower cannot work. The sensor of the lawnmower may include a lawn detection sensor, a collision detection sensor, and a depth detection sensor, or the like.

It should be noted that in S 102, if the boundary of the non-working area cannot be detected on part of the boundary on the second to-be-processed boundary, that part of the boundary on the second to-be-processed boundary prevails.

In a specific implementation, the sensor may include a lawn detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary with the lawn detection sensor, to determine a boundary of a non-lawn area in the environmental information.

Exemplarily, referring to FIG. 2, the lawn detection sensor is used to distinguish between a lawn area and a non-lawn area, for example, there may be a concrete area (e.g., a polygonal non-working area through which both the second to-be-processed boundary and the first to-be-processed boundary pass in FIG. 2) or an obstacle area (e.g., a rectangular non-working area to the right of the first to-be-processed boundary in FIG. 2) within the second to-be-processed boundary. The lawn detection sensor may be an image sensor, for example, it may be a camera set in the front end of the lawnmower (i.e., front end direction) that may capture one image of an environment in front of the lawnmower during the movement of the lawnmower based on a predetermined time interval (e.g., 0.5 sec/time). A software algorithm may be used to identify whether there is a boundary line between a non-lawn area and a lawn area in the image information, if yes, the lawnmower is controlled to move along the boundary line between the non-lawn area and the lawn area and acquire information of the boundary line as a third to-be-processed boundary. The sensor may also be a LIDAR (Laser Detection and Ranging), a sonar, etc.

Through this implementation, the lawn detection sensor may be used to distinguish between a lawn area and a non-lawn area within the second to-be-processed boundary to eliminate the non-lawn area within the second to-be-processed boundary, so that the final built boundary of the working area is more accurate, then a working efficiency of the lawnmower may be improved.

In a specific implementation, the sensor may further include a collision detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary based on the collision detection sensor, to determine a boundary of an obstacle area in the environmental information.

Exemplarily, referring to FIG. 2, the collision detection sensor is used to determine bumped obstacles, for example, stone, fences, and other obstacles that may exist within the second to-be-processed boundary (such as the rectangular non-working area to the right of the first to-be-processed boundary in FIG. 2), and the collision detection sensor may be a bumper sensor (collision sensor), a current sensor, an ultrasonic sensor, or the like. During the movement of the lawnmower along the second to-be-processed boundary, the collision detection sensor is used to acquire the environmental information of the lawnmower within the second to-be-processed boundary, to determine the boundary of the obstacle area in the environmental information.

Through this implementation, the collision detection sensor may be used to further determine the obstacle area within the second to-be-processed boundary, to eliminate the obstacle area within the second to-be-processed boundary. This implementation may serve as a supplementary detection method to the lawn detection sensor, so that the final built boundary of the working area is more accurate, in addition, it may avoid equipment damage caused by the lawnmower colliding with an obstacle during the movement, thus extending the service life of the equipment.

In a specific implementation, the sensor may further include a depth detection sensor, and the acquiring environmental information of the lawnmower within the second to-be-processed boundary with a sensor of the lawnmower, to determine a boundary of a non-working area in the environmental information, includes: acquiring the environmental information of the lawnmower within the second to-be-processed boundary with the depth detection sensor, to determine a boundary of a recessed area that the lawnmower is unable to pass through in the environmental information.

Exemplarily, the depth detection sensor may distinguish a bumped obstacle from a concave ground. For example, there may be a recessed area or a bumped area that the lawnmower is unable to pass through within the second to-be-processed boundary, and the depth detection sensor may be a depth camera sensor, a LIDAR, etc. During the movement of the lawnmower along the second to-be-processed boundary, the depth detection sensor may be used to acquire the environmental information of the lawnmower within the second to-be-processed boundary, to determine the boundary of the obstacle area in the environmental information.

Through this implementation, the depth detection sensor may be used to distinguish the boundary of the recessed area that the lawnmower is unable to pass through within the second to-be-processed boundary to eliminate the recessed area that the lawnmower is unable to pass through within the second to-be-processed boundary. This implementation may serve as a supplementary detection method to the lawn detection sensor, as well as a supplementary detection method to the lawn detection sensor and the collision detection sensor, so that the final built boundary of the working area is more accurate, in addition, it may prevent the lawnmower from getting stuck in the recessed area during the movement, which affects the working efficiency and even causes damage to the equipment.

S 103, controlling, based on the boundary of the non-working area, the lawnmower to move along the boundary of the non-working area to acquire a third to-be-processed boundary to avoid the non-working area, and establishing the boundary of the working area of the lawnmower based on the second to-be-processed boundary and the third to-be-processed boundary.

Exemplarily, referring to FIG. 2, based on the boundary of the non-working area determined in S102, the lawnmower is controlled to move along the boundary of the non-working area to acquire the third to-be-processed boundary, such as the boundary of the non-lawn area, or the boundary of the obstacle. Combining the second to-be-processed boundary and the third to-be-processed boundary, the boundary of the working area of the lawnmower is built.

The present embodiment provides a method for establishing a boundary of a working area of a lawnmower, by acquiring a first to-be-processed boundary of a working area of a lawnmower, and expanding the first to-be-processed boundary outward a preset distance as a second to-be-processed boundary; controlling the lawnmower to move along the second to-be-processed boundary, acquiring environmental information of the lawnmower within the second to-be-processed boundary with a sensor of the lawnmower, to determine a boundary of a non-working area in the environmental information, the non-working area indicating an area where the lawnmower is unable to perform mowing work; controlling, based on the boundary of the non-working area, the lawnmower to move along the boundary of the non-working area to acquire a third to-be-processed boundary to avoid the non-working area, and establishing the boundary of the working area of the lawnmower based on the second to-be-processed boundary and the third to-be-processed boundary. The second to-be-processed boundary is obtained by expanding the first to-be-processed boundary, and the non-working area in the second to-be-processed boundary is eliminated by using the sensor of the lawnmower, to establish the final boundary of the working area, so that the built boundary of the working area is more accurate and convenient, and the boundary of the working area built by using the method of the present disclosure does not require the arrangement of wires, which is easy to operate and less costly.

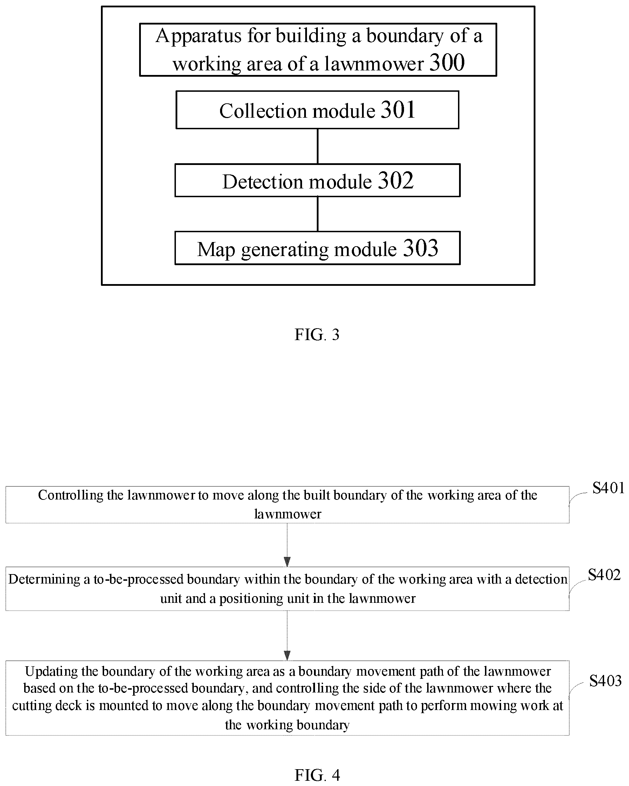

FIG. 3 a structural block diagram of an apparatus for establishing a boundary of a working area of a lawnmower according to an exemplary embodiment of the present disclosure.

An apparatus 300 for establishing a boundary of a working area of a lawnmower in the present embodiment may be loaded in a lawnmower, where the lawnmower may be adapted to perform a task of establishing a boundary of a working area of the lawnmower. Therefore, a delay in acquiring information may be reduced, and information about the boundary of the working area can be acquired in real time/dynamically, further reducing errors of the built boundary of the working area, and improving an accuracy of mowing.

As shown in the figure, the apparatus 300 for establishing a boundary of a working area of a lawnmower in the present embodiment mainly includes: a collection module 301, a detection module 302, and a map generating module 303, where the collection module 301 is configured to acquire a first to-be-processed boundary of a working area of a lawnmower, and expand the first to-be-processed boundary outward by a preset distance as a second to-be-processed boundary; the detection module 302 is configured to control the lawnmower to move along the second to-be-processed boundary, acquire environmental information of the lawnmower within the second to-be-processed boundary with a sensor of the lawnmower, to determine a boundary of a non-working area in the environmental information, the non-working area indicating an area where the lawnmower is unable to perform mowing work; and the map generating module 303 is configured to control, based on the boundary of the non-working area, the lawnmower to move along the boundary of the non-working area to acquire a third to-be-processed boundary to avoid the non-working area, and establish the boundary of the working area of the lawnmower based on the second to-be-processed boundary and the third to-be-processed boundary.

Alternatively, the collection module 301 is further configured to control the lawnmower to move along an edge of the working area based on a movement instruction set by a user, and acquire positioning information of the lawnmower during the movement; and the map generating module 303 is further configured to determine the first to-be-processed boundary based on the positioning information of the lawnmower.

In addition, the apparatus 300 for establishing a boundary of a working area of a lawnmower of an embodiment of the present disclosure may also be used to implement other steps in each of the embodiments of the method for establishing a boundary of a working area of a lawnmower and has the beneficial effects of the corresponding method step embodiment, detailed description thereof will be omitted.

An exemplary embodiment of the present disclosure also provides a non-transitory computer readable storage medium storing computer instructions, where, the computer instructions are used to cause the computer to perform the method for establishing a boundary of a working area of a lawnmower according to embodiments of the present disclosure.

An exemplary embodiment of the present disclosure also provides a computer program product, including a computer program, where, the computer program, when executed by a processor of a computer, cause the computer to perform the method for establishing a boundary of a working area of a lawnmower according to embodiments of the present disclosure.

An exemplary embodiment of the present disclosure also provides a lawnmower, including: one or more processors; and a memory storing a program; where, the program includes instructions, the instructions, when executed by the processor, cause the processor to perform the method for establishing a boundary of a working area of a lawnmower according to embodiments of the present disclosure.

In a specific implementation, in the present embodiment, at least one side of a front end of the lawnmower is mounted with a cutting deck, and the instructions, when executed by the processor, may also cause the processor to perform a method for mowing at a working boundary of a lawnmower. In the present embodiment, specific embodiments of the lawnmower performing a method for mowing at a working boundary of a lawnmower will be described in detail below in connection with the accompanying drawings.

FIG. 4 is a schematic flowchart of a method for mowing at a working boundary of a lawnmower according to an exemplary embodiment of the present disclosure. As shown in the figure, the method is applied to a lawnmower, at least one side of a front end of the lawnmower is mounted with a cutting deck, and the present embodiment mainly includes the following steps:

S401, controlling the lawnmower to move along the built boundary of the working area of the lawnmower.

Exemplarily, the built boundary of the working area of the lawnmower may be the boundary of the working area obtained by using the method for establishing a boundary of a working area of a lawnmower as previously described. The boundary of the working area may be stored in the lawnmower, or the boundary of the working area may be obtained by performing information interaction with other mobile devices or a cloud server.

In a specific implementation, the controlling the lawnmower to move along the built boundary of the working area of the lawnmower, includes:

S4011, determining, based on current positioning information of the lawnmower and the boundary of the working area, a coordinate point on the boundary of the working area nearest to the current positioning of the lawnmower.

S4012, controlling the lawnmower to move to the coordinate point to cause the lawnmower to move along the boundary of the working area.

Exemplarily, the lawnmower may be located inside or outside the working area before starting mowing work at the working boundary. When starting the mowing work at the working boundary, the current positioning information of the lawnmower and the boundary of the working area may be acquired, and the positioning information may be acquired by using RTK positioning technology to calculate the coordinate point on the boundary of the working area that is nearest to the current positioning of the lawnmower. The lawnmower may be controlled to move to the coordinate point first, and then move along the boundary of the working area from the coordinate point.

Through this implementation, a positional relationship between the current positioning information of the lawnmower and the boundary of the working area is used to plan the nearest path for the lawnmower from the current position to the boundary of the working area to avoid the lawnmower from moving extra distance, thus improving the working efficiency of the lawnmower.

S402, determining a to-be-processed boundary within the boundary of the working area based on a detection unit and a positioning unit in the lawnmower.

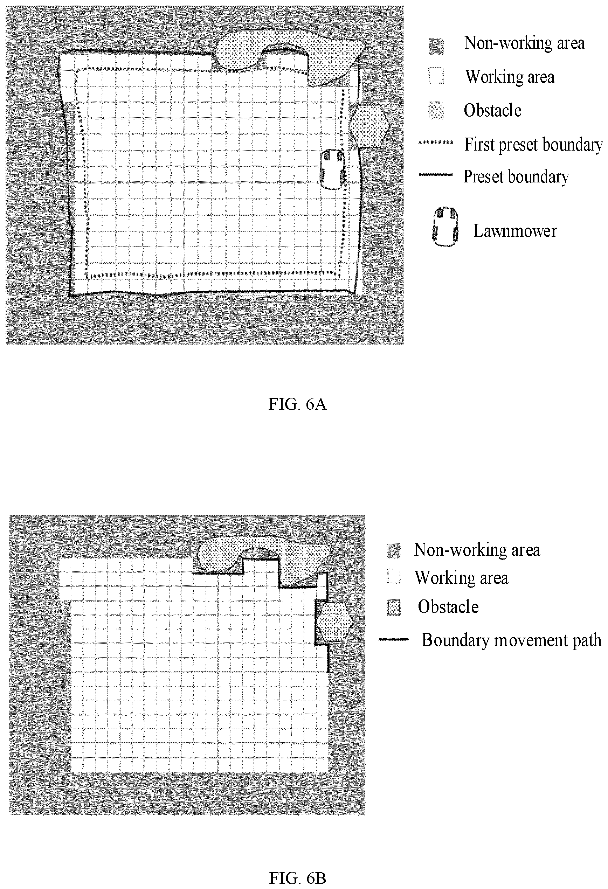

Exemplarily, referring to FIG. 6A, the to-be-processed boundary is a boundary of an area where the lawnmower is unable to perform mowing work, including an obstacle area (such as fountains, stones and fences), a non-lawn area (concrete ground, lane, etc.), and a concave ground where the lawnmower cannot work. The detection unit is configured to detect the area where the lawnmower is unable to perform mowing work within the boundary of the working area, for example, a lawn detection sensor, a collision detection sensor, and a depth detection sensor. The positioning unit is configured to acquire the boundary of the area where the lawnmower is unable to perform mowing work as the to-be-processed boundary, such as GPS positioning, RTK positioning. The above detection unit and the positioning unit may be used in any combination, which is not limited in the present embodiment.

It should be noted that in S402, if the non-working area cannot be detected on part of the boundary on the boundary of the working area, that part of the boundary on the boundary of the working area prevails, and there is no need to update that part of the boundary on the boundary of the working area.

In a specific implementation, the detection unit includes a lawn detection sensor, and the determining a to-be-processed boundary within the boundary of the working area based on a detection unit and a positioning unit in the lawnmower, includes: acquiring a boundary of a non-lawn area within the boundary of the working area as the to-be-processed boundary, based on the lawn detection sensor and the positioning unit.

Exemplarily, referring to FIG. 6A, the positioning unit may be RTK positioning, and the lawn detection sensor is used to distinguish between a lawn area and a non-lawn area, for example, there may be a concrete ground area or an obstacle area within the boundary of the working area. The lawn detection sensor may be an image sensor, for example, the lawn detection sensor may be a camera set in the front end of the lawnmower (i.e., front end direction) that may acquire image information of an environment in front of the lawnmower once during the movement of the lawnmower based on a predetermined time interval (e.g., 0.5 sec/time). A software algorithm may be used to identify whether there is a non-lawn area and a lawn area in the image information, if yes, positioning information of the boundary line of the area may be acquired as the to-be-processed boundary through RTK positioning. The lawn detection sensor may also be a LIDAR, a sonar, etc., which is not limited in this implementation.

Through this implementation, the lawn detection sensor may be used to distinguish between a lawn area and a non-lawn area within the boundary of the working area, and the positioning unit may be used to position the boundary line of the area to eliminate the non-lawn area within the boundary of the working area, so that the final cut working boundary is more accurate, then a working effect of the lawnmower may be better.

In a specific implementation, the detection unit further includes a collision detection sensor, and the determining a to-be-processed boundary within the boundary of the working area based on a detection unit and a positioning unit in the lawnmower, includes: acquiring a boundary of an obstacle area within the boundary of the working area as the to-be-processed boundary, based on the collision detection sensor and the positioning unit.

Exemplarily, referring to FIG. 6A, the collision detection sensor is used to determine bumped obstacles, for example, stones, fences, and other obstacles that may exist within the boundary of the working area, and the collision detection sensor may be a bumper sensor (collision sensor), a current sensor, an ultrasonic sensor, or the like. During the movement of the lawnmower along the boundary of the working area, the collision detection sensor and the positioning unit are used to acquire the boundary of the obstacle area within the boundary of the working area of the lawnmower as the to-be-processed boundary.

Through this implementation, the collision detection sensor may be used to further determine the obstacle area within the boundary of the working area, and the positioning unit may be used to position the boundary line of the area, to eliminate the obstacle area within the boundary of the working area. This implementation may serve as a supplementary detection method to the lawn detection sensor, so that the final cut working boundary is more accurate, in addition, it may avoid equipment damage caused by the lawnmower colliding with an obstacle during mowing at the working boundary, thus extending the service life of the equipment.

In a specific implementation, the detection unit further includes a depth detection sensor, and the determining a to-be-processed boundary within the boundary of the working area based on a detection unit and a positioning unit in the lawnmower, includes: acquiring a boundary of a recessed area that the lawnmower is unable to pass through within the boundary of the working area as the to-be-processed boundary, based on the depth detection sensor and the positioning unit.

Exemplarily, the depth detection sensor may distinguish between bumping and a concave ground. For example, there may be a recessed area or a bumped area that the lawnmower is unable to pass through within the boundary of the working area, and the depth detection sensor may be a depth camera sensor, a LIDAR, etc. During the movement of the lawnmower along the boundary of the working area, the depth detection sensor and the positioning unit are used to acquire the boundary of the recessed area within the boundary of the working area of the lawnmower as the to-be-processed boundary.

Through this implementation, the depth detection sensor may be used to distinguish the boundary of the recessed area that the lawnmower is unable to pass through within the boundary of the working area, and the positioning unit may be used to position the boundary line of the area, to eliminate the recessed area that the lawnmower is unable to pass through within the boundary of the working area. This implementation may serve as a supplementary detection method to the lawn detection sensor, as well as a supplementary detection method to the lawn detection sensor and the collision detection sensor. By incorporating the above multiple sensors, it may improve a cutting and mowing accuracy of the lawnmower near the boundary of the lawn, reduce missed mowing, and can avoid the lawnmower running out of the perimeter of the lawn, and also avoid the lawnmower getting stuck in the recessed area during working of mowing at the working boundary, which affects the working efficiency and even causes damage to the equipment.

S403, updating the boundary of the working area as a boundary movement path of the lawnmower based on the to-be-processed boundary, and controlling the side of the lawnmower where the cutting deck is mounted to move along the boundary movement path to perform mowing work at the working boundary.

Exemplarily, referring to FIG. 6B, the boundary of the working area is updated based on the to-be-processed boundary obtained in S402. For example, there is a non-lawn area, an obstacle area, etc. on part of the boundary of the working area, and the boundary of the working area may be updated using the boundary of the non-lawn area, the boundary of the obstacle area, etc. to obtain the final boundary movement path. The side of the lawnmower where the cutting deck is mounted is controlled to move along the boundary movement path, and the side of the lawnmower where the cutting deck is mounted may be the left or right side of the lawnmower, which is not limited by the present embodiment.

In a specific implementation, the working area may be set as a grid map, when determining the boundary movement path, the boundary movement path may be determined in coordinates of the grid map combining the grid map, after updating the boundary of the working area based on the to-be-processed boundary, so that the boundary movement path is more convenient for the lawnmower to move and at the same time more convenient for path planning of the lawnmower within the working area.

In a specific implementation, considering a width of the lawnmower, a mounting position of the cutting deck and a positioning location of the lawnmower usually at a center axis of the lawnmower, the boundary movement path may be translated within the row by a certain distance, for example, the above certain distance may be one-half of the width of the lawnmower, to realize control of the side of the lawnmower where the cutting deck is mounted to move along the boundary movement path, so as to avoid the lawnmower cutting beyond the boundary of the working area.

In the present embodiment, when the lawnmower performs mowing work at the boundary of the working area, the detection unit and the positioning unit of the lawnmower are used to detect the boundary of the non-working area within the boundary of the working area based on the boundary of the working area, so as to update the boundary of the working area in real time to obtain the boundary movement path, then the side of the lawnmower where the cutting deck is mounted is controlled to mow along the boundary movement path, so that the mowing work at the boundary of the working area has better effect and the cutting is cleaner, avoiding the situation of missing or exceeding an actual boundary; in addition, there is no need to arrange wires, avoiding the problem of inaccurate mowing at the boundary of the working area due to inaccurate position of the wires.

In a specific implementation, the method further includes: performing smoothing processing on the boundary movement path to obtain a first boundary movement path, controlling the side of the lawnmower where the cutting deck is mounted to move along the first boundary movement path to perform mowing work at the working boundary.

Exemplarily, smoothing processing may be performed on the boundary movement path to obtain the first boundary movement path. For example, B-sample smoothing may be performed on the boundary movement path, so that when the side of the lawnmower where the cutting deck is mounted moves along the first boundary movement path, the lawnmower moves smoother and body jitter is reduced.

In a specific implementation, the method further includes: translating the first boundary movement path inward by a first preset distance to obtain a second boundary movement path; and controlling the side of the lawnmower where the cutting deck is mounted to move along the second boundary movement path to perform mowing work at the working boundary.

Specifically, after the lawnmower has performed mowing once, the first boundary movement path may be translated inward by the first preset distance to obtain the second boundary movement path, and the first preset distance is less than a length of the cutting deck of the lawnmower, so that when the lawnmower mows along the second boundary movement path, a trajectory of the cutting deck of the lawnmower partially coincides with a trajectory of the cutting deck of the previous boundary mowing. Through this implementation, the trajectory of the boundary mowing may be joined with the trajectory of mowing within the working area to avoid any missing parts, so that the working effect of the lawnmower is better.

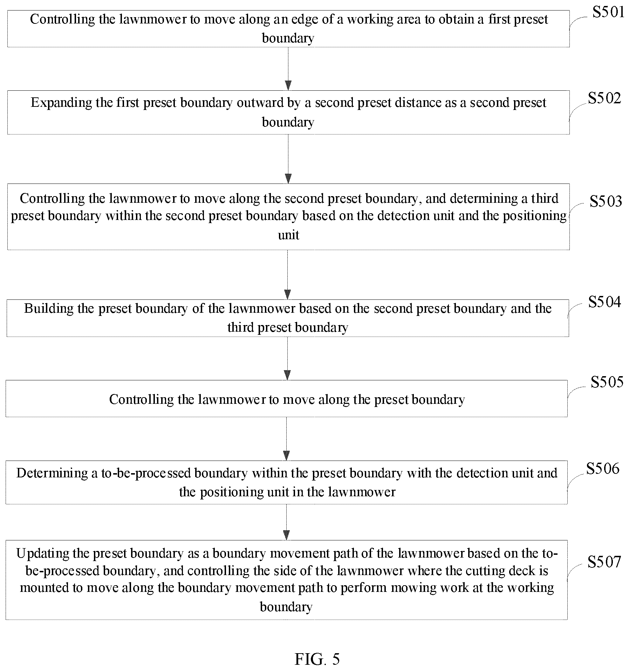

FIG. 5 is a schematic flowchart of the method for mowing at a working boundary of a lawnmower according to another exemplary embodiment of the present disclosure. As shown in the figure, the present embodiment mainly includes the following steps:

S501, controlling the lawnmower to move along an edge of a working area to obtain a first preset boundary.

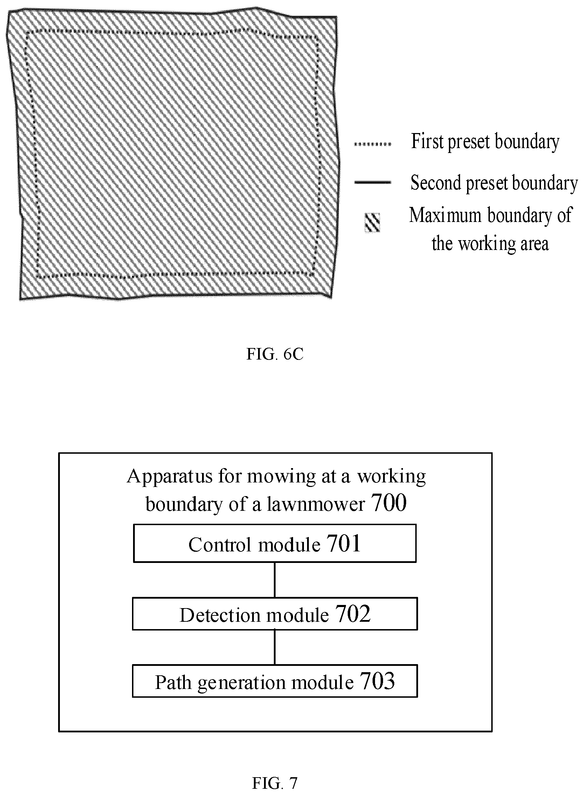

Exemplarily, referring to FIG. 6C, the lawnmower may be controlled to move along the edge of the working area based on a movement instruction set by a user, and positioning information of the lawnmower may be acquired to obtain the first preset boundary. A frequency for acquiring the positioning information may be once every 0.1 seconds, and a method for acquiring the positioning information may be GPS navigation positioning, visual positioning or RTK positioning, which is not limited by the present disclosure. This implementation acquires the first preset boundary by controlling the lawnmower to collect the positioning information, which is convenient and fast.

S502, expanding the first preset boundary outward by a second preset distance as a second preset boundary.

Exemplarily, referring to FIG. 6C, the first preset boundary may be obtained by manually remote controlling the lawnmower to move along the edge of the working area, or by acquiring a boundary already stored in the lawnmower, or the first preset boundary may be acquired by interacting with a cloud server or other mobile devices, which is not limited by the present embodiment. The second preset distance is usually no more than 1 meter. The second preset boundary is the maximum boundary that defines the working area of the lawnmower.

S503, controlling the lawnmower to move along the second preset boundary, and determining a third preset boundary within the second preset boundary based on the detection unit and the positioning unit.

Exemplarily, the third preset boundary is a boundary of an area where the lawnmower is unable to perform mowing work, such as an obstacle area, a non-lawn area, and a concave ground where the lawnmower cannot work. The positioning unit may include GPS positioning, RTK (i.e., Real Time Kinematic) positioning, etc. The detection unit may include a lawn detection sensor, a collision detection sensor, and a depth detection sensor, or the like. The lawn detection sensor may be used to distinguish between a lawn area and a non-lawn area (e.g., to identify a boundary line between the lawn area and the non-lawn area), such as an image sensor, a LIDAR, or a sonar; the collision detection sensor may determine bumped obstacles, such as a collision sensor, a current sensor, or an ultrasonic sensor; and the depth detection sensor may distinguish between bumping and a concave ground, such as a depth camera sensor, or a LIDAR. The above sensors may be used in any combination, which is not limited by the present embodiment.

S504, establishing the preset boundary of the lawnmower based on the second preset boundary and the third preset boundary.

Exemplarily, the preset boundary may be built based on the third preset boundary determined in S503, such as the boundary of a non-lawn area, the boundary of an obstacle, in combination with the second preset boundary and the third preset boundary.

S505, controlling the lawnmower to move along the preset boundary.

S506, determining a to-be-processed boundary within the preset boundary based on the detection unit and the positioning unit in the lawnmower.

Here, the to-be-processed boundary is a boundary of an area where the lawnmower is unable to perform mowing work, the detection unit is configured to detect the area where the lawnmower is unable to perform mowing work within the preset boundary, and the positioning unit is configured to acquire the boundary of the area where the lawnmower is unable to perform mowing work as the to-be-processed boundary.

S507, updating the preset boundary as a boundary movement path of the lawnmower based on the to-be-processed boundary, and controlling the side of the lawnmower where the cutting deck is mounted to move along the boundary movement path to perform mowing work at the working boundary.

It should be noted that the specific implementation of steps S505-S507 may be implemented with reference to the specific implementation of steps S401-S403 described above, and detailed description thereof will be omitted. Here, the preset boundary in the present embodiment may refer to the built boundary of the working area of the lawnmower in steps S401-S403.

In the present embodiment, the second preset boundary is obtained by expanding the first preset boundary, and then the non-working area in the second preset boundary is eliminated by the detection unit and the positioning unit of the lawnmower, to establish the boundary of the working area, so that the built boundary of the working area is more accurate. Further, when the lawnmower performs mowing work at the built boundary of the working area, the detection unit and the positioning unit of the lawnmower are used to detect the boundary of the non-working area within the boundary of the working area, so as to update the boundary of the working area in real time to obtain the boundary movement path, then the side of the lawnmower where the cutting deck is mounted is controlled to mow along the boundary movement path, so that the mowing work at the boundary of the working area has better effect and the cutting is cleaner, avoiding the situation of missing or exceeding the actual boundary; in addition, there is no need to arrange wires, avoiding the problem of inaccurate mowing at the boundary of the working area due to inaccurate position of the wires.

FIG. 7 is a structural block diagram of an apparatus for mowing at a working boundary of a lawnmower according to an exemplary embodiment of the present disclosure.

The lawnmower in the present embodiment further includes an apparatus 700 for mowing at a working boundary of a lawnmower, at least one side of a front end of the lawnmower is mounted with a cutting deck, and the lawnmower may be adapted to perform a mowing task at the working boundary of the lawnmower.

As shown in the figure, the apparatus 700 for mowing at a working boundary of a lawnmower in the present embodiment mainly includes a controlling module 701, a detection module 702, and a path generation module 703. The controlling module 701 is configured to control the lawnmower to move along a preset boundary. The detection module 702 is configured to determine a to-be-processed boundary within the preset boundary based on a detection unit and a positioning unit in the lawnmower, where the to-be-processed boundary is a boundary of an area where the lawnmower is unable to perform mowing work, the detection unit is configured to detect the area where the lawnmower is unable to perform mowing work within the preset boundary, and the positioning unit is configured to acquire the boundary of the area where the lawnmower is unable to perform mowing work as the to-be-processed boundary. The path generation module 703 is configured to update the preset boundary as a boundary movement path of the lawnmower based on the to-be-processed boundary, control the side of the lawnmower where the cutting deck is mounted to move along the boundary movement path to perform mowing work at the working boundary.

In addition, the apparatus 700 for mowing at a working boundary of a lawnmower of an embodiment of the present disclosure may also be used to implement other steps in each of the embodiments of the method for mowing at a working boundary of a lawnmower and has the beneficial effects of the corresponding method step embodiment, detailed description thereof will be omitted.

It should be noted that in the description of the present disclosure, the terms "first" and "second" are used only to facilitate the description of different components or names, and are not to be understood as indicating or implying a sequential relationship, relative importance, or implicitly specifying the number of technical features indicated. Thus, the features limited to "first" and "second" may explicitly or implicitly include at least one such feature.

Unless otherwise defined, all technical and scientific terms used herein have the same meaning as commonly understood by those skilled in the art of the present disclosure. The terms used herein in the specification of the present disclosure are for the purpose of describing specific embodiments only and are not intended to limit the present disclosure.

It should be noted that although the specific embodiments of the present disclosure are described in detail in conjunction with the accompanying drawings, they should not be construed as limiting the scope of protection of the present disclosure. Within the scope described in the claims, various modifications and variations that can be made by those skilled in the art without creative work still fall within the scope of protection of the present disclosure.

Examples in the embodiments of the present disclosure are intended to illustrate technical features of the embodiments of the present disclosure in a concise way so that those skilled in the art can intuitively understand the technical features of the embodiments of the present disclosure, and are not intended to be an undue limitation of the embodiments of the present disclosure.

Finally, it should be noted that the above embodiments are only used to illustrate the technical solution of the present disclosure, not to limit it; despite the detailed description of the present disclosure with reference to the foregoing embodiments, those of ordinary skill in the art should understand that it is still possible to modify the technical solution recorded in the foregoing embodiments, or to replace some of the technical features with equivalent ones; and these modifications or replacements do not make the essence of the corresponding technical solution out of the spirit and scope of the technical solution of the embodiments of the present disclosure.

## Claims

1. A method for establishing a boundary of a working area of a lawnmower, the method comprising:
acquiring a first to-be-processed boundary of a working area of a lawnmower, and expanding the first to-be-processed boundary outward by a preset distance as a second to-be-processed boundary;
controlling the lawnmower to move along the second to-be-processed boundary, acquiring environmental information of the lawnmower within the second to-be-processed boundary with a sensor of the lawnmower, to determine a boundary of a non-working area in the environmental information, the non-working area indicating an area where the lawnmower is unable to perform mowing work; and
controlling, based on the boundary of the non-working area, the lawnmower to move along the boundary of the non-working area to acquire a third to-be-processed boundary to avoid the non-working area, and establishing the boundary of the working area of the lawnmower based on the second to-be-processed boundary and the third to-be-processed boundary.

2. The method according to claim 1, wherein the acquiring a first to-be-processed boundary of a working area of a lawnmower, comprises:
controlling the lawnmower to move along an edge of the working area based on a movement instruction set by a user, and acquiring positioning information of the lawnmower during the movement; and
determining the first to-be-processed boundary based on the positioning information of the lawnmower.

3. The method according to claim 1, wherein the sensor comprises a lawn detection sensor, and the acquiring environmental information of the lawnmower within the second to-be-processed boundary with a sensor of the lawnmower, to determine a boundary of a non-working area in the environmental information, comprises:
acquiring the environmental information of the lawnmower within the second to-be-processed boundary with the lawn detection sensor, to determine a boundary of a non-lawn area in the environmental information.

4. The method according to claim 3, wherein the sensor further comprises a collision detection sensor, and the acquiring environmental information of the lawnmower within the second to-be-processed boundary with a sensor of the lawnmower, to determine a boundary of a non-working area in the environmental information, comprises:
acquiring the environmental information of the lawnmower within the second to-be-processed boundary with the collision detection sensor, to determine a boundary of an obstacle area in the environmental information.

5. The method according to claim 3 or 4, wherein the sensor further comprises a depth detection sensor, and the acquiring environmental information of the lawnmower within the second to-be-processed boundary with a sensor of the lawnmower, to determine a boundary of a non-working area in the environmental information, comprises:
acquiring the environmental information of the lawnmower within the second to-be-processed boundary with the depth detection sensor, to determine a boundary of a recessed area that the lawnmower is unable to pass through in the environmental information.

6. The method according to claim 2, wherein the method further comprises:
determining the preset distance based on an error value of the positioning information of the lawnmower, wherein the error value refers to an error value between the positioning information and an actual location of the lawnmower.

7. A non-transitory computer readable storage medium storing computer instructions, wherein, the computer instructions are used to cause the computer to perform the method according to any one of claims 1-6.

8. A lawnmower, comprising:
one or more processors; and
a memory storing a program;
wherein, the program comprises instructions, the instructions, when executed by the processor, cause the processor to perform a method for establishing a boundary of a working area of a lawnmower, the method comprising:
acquiring a first to-be-processed boundary of a working area of a lawnmower, and expanding the first to-be-processed boundary outward a preset distance as a second to-be-processed boundary;
controlling the lawnmower to move along the second to-be-processed boundary, acquiring environmental information of the lawnmower within the second to-be-processed boundary with a sensor of the lawnmower, to determine a boundary of a non-working area in the environmental information, the non-working area indicating an area where the lawnmower is unable to perform mowing work; and
controlling, based on the boundary of the non-working area, the lawnmower to move along the boundary of the non-working area to acquire a third to-be-processed boundary to avoid the non-working area, and establishing the boundary of the working area of the lawnmower based on the second to-be-processed boundary and the third to-be-processed boundary.

9. The lawnmower according to claim 8, wherein the sensor comprises a lawn detection sensor, and the acquiring environmental information of the lawnmower within the second to-be-processed boundary with a sensor of the lawnmower, to determine a boundary of a non-working area in the environmental information, comprises:
acquiring the environmental information of the lawnmower within the second to-be-processed boundary with the lawn detection sensor, to determine a boundary of a non-lawn area in the environmental information.

10. The lawnmower according to claim 9, wherein the sensor further comprises a collision detection sensor, and the acquiring environmental information of the lawnmower within the second to-be-processed boundary with a sensor of the lawnmower, to determine a boundary of a non-working area in the environmental information, comprises:
acquiring the environmental information of the lawnmower within the second to-be-processed boundary with the collision detection sensor, to determine a boundary of an obstacle area in the environmental information.

11. The lawnmower according to claim 9 or 10, wherein the sensor further comprises a depth detection sensor, and the acquiring environmental information of the lawnmower within the second to-be-processed boundary with a sensor of the lawnmower, to determine a boundary of a non-working area in the environmental information, comprises:
acquiring the environmental information of the lawnmower within the second to-be-processed boundary with the depth detection sensor, to determine a boundary of a recessed area that the lawnmower is unable to pass through in the environmental information.

12. The lawnmower according to claim 8, wherein at least one side of a front end of the lawnmower is mounted with a cutting deck, the processor is further configured to perform a method for mowing at a working boundary of a lawnmower, and the method comprises:
controlling the lawnmower to move along the built boundary of the working area of the lawnmower;
determining a to-be-processed boundary within the boundary of the working area with a detection unit and a positioning unit in the lawnmower, wherein the to-be-processed boundary is a boundary of an area where the lawnmower is unable to perform mowing work, the detection unit is configured to detect the area where the lawnmower is unable to perform mowing work within the boundary of the working area, and the positioning unit is configured to acquire the boundary of the area where the lawnmower is unable to perform mowing work as the to-be-processed boundary; and
updating the boundary of the working area as a boundary movement path of the lawnmower based on the to-be-processed boundary, and controlling the side of the lawnmower where the cutting deck is mounted to move along the boundary movement path to perform mowing work at the working boundary.

13. The lawnmower according to claim 12, wherein the method for mowing at a working boundary performed by the processor further comprises:
performing smoothing processing on the boundary movement path to obtain a first boundary movement path,;
translating the first boundary movement path inward by a first preset distance to obtain a second boundary movement path, wherein the first preset distance is less than a length of the cutting deck of the lawnmower; and
controlling the side of the lawnmower where the cutting deck is mounted to move along the second boundary movement path to perform mowing work at the working boundary.

14. The lawnmower according to claim 13, wherein the detection unit comprises a lawn detection sensor, and the determining a to-be-processed boundary within the boundary of the working area with a detection unit and a positioning unit in the lawnmower, comprises:
acquiring a boundary of a non-lawn area within the boundary of the working area as the to-be-processed boundary, with the lawn detection sensor and the positioning unit; or
the detection unit comprises a collision detection sensor, and the determining a to-be-processed boundary within the boundary of the working area with a detection unit and a positioning unit in the lawnmower, comprises:
acquiring a boundary of an obstacle area within the boundary of the working area as the to-be-processed boundary, with the collision detection sensor and the positioning unit.

15. The lawnmower according to claim 14, wherein the detection unit further comprises a depth detection sensor, and the determining a to-be-processed boundary within the boundary of the working area with a detection unit and a positioning unit in the lawnmower, comprises:
acquiring a boundary of a recessed area that the lawnmower is unable to pass through within the boundary of the working area as the to-be-processed boundary, with the depth detection sensor and the positioning unit.
